# EUROPEAN PATENT SPECIFICATION

(11) **EP 2 637 479 B1**
(45) Date of publication and mention of the grant of the patent: **03.10.2018**
(21) Application number: 13157928.6
(22) Date of filing: 06.03.2013
(51) Int. Cl.: H05B 6/78, C03C 23/00, H05B 6/80

(54) **High frequency heating apparatus**
Hochfrequenzheizgerät
Appareil de chauffage à haute fréquence

(30) Priority: 06.03.2012 KR 20120022639
(43) Date of publication of application: 11.09.2013
(73) Proprietor: Corning Precision Materials Co., Ltd., Asan-si, Chungcheongnam-do 31452 (KR)
(72) Inventor: Lee, Hoikwan, 336-841 Asan-si Chung Cheong Nam-Do (KR); Yoon, Kyungmin, 336-841 Asan-si Chung Cheong Nam-Do (KR); Cho, Seo-Yeong, 336-841 Asan-si Chung Cheong Nam-Do (KR); Kwon, YoonYoung, 336-841 Asan-si Chung Cheong Nam-Do (KR); Nam, Jinsu, 336-841 Asan-si Chung Cheong Nam-Do (KR); Park, Kyungwook, 336-841 Asan-si Chung Cheong Nam-Do (KR); Choi, Jeayoung, 336-841 Asan-si Chung Cheong Nam-Do (KR)
(74) Representative: Gulde & Partner

(56) References cited:
- EP-A1- 1 947 064
- GB-A- 1 211 024
- US-A- 3 704 523
- US-A- 4 005 301
- US-A- 5 782 947
- US-A1- 2004 104 514
- US-A1- 2006 026 994

## Description

### BACKGROUND OF THE INVENTION

### Field of the Invention

The present invention relates to a high frequency heating apparatus according to the preamble of claim 1, and more particularly, to a high frequency heating apparatus which heats a substrate by applying high frequency waves. Heating apparatuses are disclosed in US 3,704,523; US 2006/002 994 A1; US 5,782,947; GB 1 211 024 and US 4,005,301.

### Description of Related Art

The use of glass materials in a variety of industrial fields, specifically, as a cover for a photovoltaic cell, a flat display such as a thin-film transistor liquid crystal display (TFT-LCD), a plasma display panel (PDP) or an organic electroluminescent (EL) device, a variety of mobile electronic devices, and the like, is rapidly increasing. Accordingly, glass materials are required to have lightweight and a thin profile.

However, the trend in glass materials towards a light and thin profile leads to a problem of fragility due to its characteristic of high brittleness. Accordingly, a variety of tempering methods is being studied in order to improve the durability of glass.

Glass tempering technologies of the related art include chemical strengthening technology that uses an ion exchange between the glass surface and a water solution (molten salt) and thermal strengthening technology that includes heat treatment on glass.

The chemical strengthening technology has the drawbacks of poor usability regarding process time necessary for the ion exchange between the glass surface and a water solution, the size of the glass, recycling of the water solution (contamination and concentration control), and the like.

In contrast, the thermal strengthening technology is to strengthen glass by increasing the temperature of a plate glass and quenching it while moving the plate glass in a hot horizontal furnace. A variety of methods for applying this technology in the industry are underway since heating using high frequency waves has advantages in that the heat treatment effects are enhanced due to volume heating and rapid heating is enabled.

At present, high frequency heating technology applied in mass production facilities is generally used in a low temperature range (about 200 °C) because of the problem of uniform heating or the like.

In addition, in the case of heat-treating a plate glass having a large size by applying the high frequency technology of the related art, the use of a single high frequency generator is disadvantageous in that control over electric field distribution inside a chamber is difficult and the temperature growth rate is low. Although the use of a plurality of high frequency generators increases the temperature growth rate to a certain degree, concentration in electric fields due to interference between the high frequency generators leads to localized heating in the glass and the decreased heating efficiency, which is problematic.

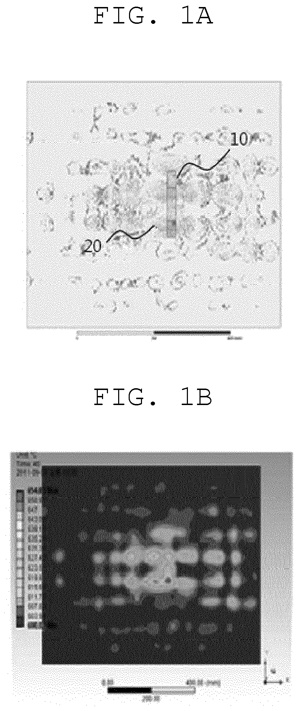

FIG. 1A and FIG. 1B are pictures of electric field distribution analysis and temperature distribution analysis that are measured after heating a piece of glass using a single high frequency generator in a method of the related art. As shown in FIG. 1A and FIG. 1B, it can be appreciated that, when the glass is heated using a single high frequency generator 10, nonuniform electric field distribution occurs in the glass, thereby forming a hot spot area 20.

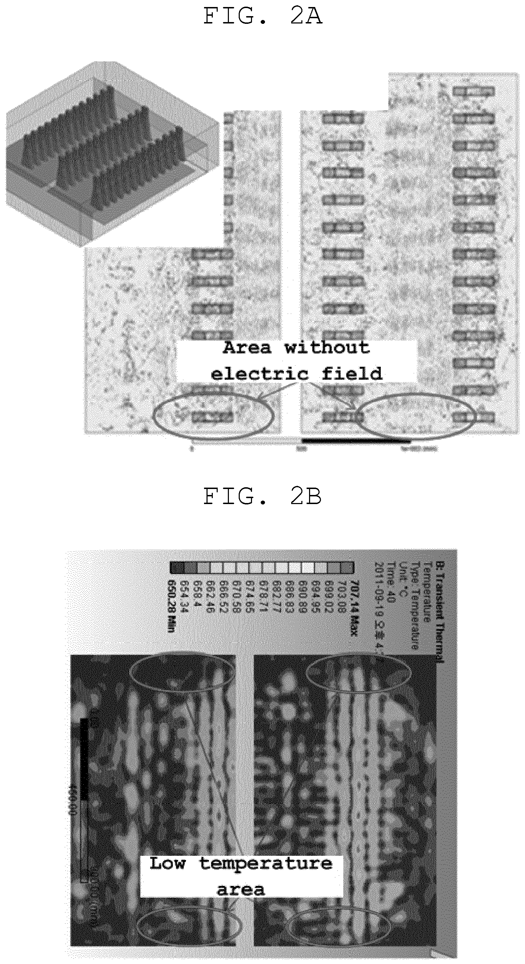

FIG. 2A and FIG. 2B are pictures of electric field distribution analysis and temperature distribution analysis that are measured after heating a piece of glass using a plurality of high frequency generators in a method of the related art. In FIG. 2A, the apricot area represents the portion where no electric field is formed. In FIG. 2B, the blue area represents a low temperature, and the red area represents a high temperature. It can be appreciated that the corner areas of the heat-treated plate glass are not heated since no electric fields are formed in these areas. In addition, hot spots are formed in localized areas of the plate glass due to the interference of the electric fields.

The information disclosed in the Background of the Invention section is only for the enhancement of understanding of the background of the invention, and should not be taken as an acknowledgment or any form of suggestion that this information forms a prior art that would already be known to a person skilled in the art.

### BRIEF SUMMARY OF THE INVENTION

The object at the invention is to provide a high frequency heating apparatus, with which a substrate can be heated uniformly and efficiently. This object is solved by the features of claim 1. In particular, various aspects of the present invention provide a high frequency heating apparatus which can prevent a substrate being heated locally and high frequency waves generated by a plurality of rows of high frequency generators from interfering with each other.

According to the present invention, the high frequency heating apparatus includes a high frequency generator which generates high frequency to heat a substrate and a reflector which reflects the high frequency generated by the high frequency generator toward the substrate.

The high frequency generator comprises a plurality of high frequency generators, and the reflector partitions the plurality of high frequency generators into groups each including at least one high frequency generator of the plurality of high frequency generators.

The reflector includes a first reflecting portion which forms a partition between high frequency generators of the plurality of high frequency generators which are spaced apart from each other.

The reflector may include a second reflecting portion which is disposed on a left side and/or a right side of the high frequency generator.

The reflector may include a third reflecting portion which is disposed above and/or below the substrate, the main plane of the third reflecting portion facing the main plane of the substrate.

The reflector has a plurality of holes. The holes have a diameter of 3 mm or less. A distance from the high frequency generators of the plurality of high frequency generators which are spaced apart from each other to the first reflecting portion is n/2*λ. N is a natural number ranging from 1 to 12, and λ is a wavelength of the high frequency that is generated by the plurality of high frequency generators.

According to embodiments of the present invention, since the reflector reflects high frequency waves, uniform electric fields are formed over the entire area of the substrate, and the entire area of the substrate can be uniformly heated.

In addition, in the high frequency heating apparatus having a plurality of high frequency generators, it is possible to prevent high frequency waves generated by the individual high frequency generators from interfering with each other, thereby preventing electric fields from being concentrated and the substrate from being heated locally.

Furthermore, it is possible to increase the temperature growth rate of the substrate and improve the energy efficiency of the high frequency heating apparatus.

The methods and apparatuses of the present invention have other features and advantages which will be apparent from, or are set forth in greater detail in the accompanying drawings, which are incorporated herein, and in the following Detailed Description of the Invention, which together serve to explain certain principles of the present invention.

### BRIEF DESCRIPTION OF THE DRAWINGS

FIG. 1A and FIG. 1B are pictures of electric field distribution analysis and temperature distribution analysis that are measured after heating a piece of glass using a single high frequency generator in a method of the related art;
FIG. 2A and FIG. 2B are pictures of electric field distribution analysis and temperature distribution analysis that are measured after heating a piece of glass using a plurality of high frequency generators in a method of the related art;
FIG. 3 is a schematic top plan view showing a high frequency heating apparatus according to an embodiment;
FIG. 4A and FIG. 4B are a schematic top plan view and a side elevation view showing a high frequency heating apparatus according to another embodiment of the present invention;
FIG. 5 is a schematic top plan view showing a high frequency heating apparatus according to a further embodiment of the present invention;
FIG. 6 is a schematic configuration view of a reflector according to an embodiment of the present invention;
FIG. 7A and FIG. 8B are pictures of electric field distribution analysis and temperature distribution analysis that are measured after heating a piece of glass using a high frequency heating apparatus according to an embodiment of the present invention;
FIG. 8A and FIG. 8B are pictures of electric field distribution analysis and temperature distribution analysis that are measured after heating a piece of glass using a high frequency heating apparatus according to another embodiment of the present invention;
FIG. 9 is a graph showing the temperature growth rate of a substrate which is heated using a high frequency heating apparatus according to another embodiment of the present invention;
FIG. 10 is a graph showing surface temperatures of a plate glass that are measured after the plate glass is carried to a high frequency heating apparatus according to a further embodiment of the present invention; and
FIG. 11 is a side elevation view showing a high frequency heating apparatus according to a further embodiment.

### DETAILED DESCRIPTION OF THE INVENTION

Reference will now be made in detail to a high frequency heating apparatus according to the present invention of the present invention, embodiments of which are illustrated in the accompanying drawings and described below, so that a person having ordinary skill in the art to which the present invention relates can easily put the present invention into practice.

Throughout this document, reference should be made to the drawings, in which the same reference numerals and signs are used throughout the different drawings to designate the same or similar components. In the following description of the present invention, detailed descriptions of known functions and components incorporated herein will be omitted when they may make the subject matter of the present invention unclear.

In addition, in the following description, a direction from the front to the rear is defined as a direction in which a substrate is carried, and a direction from left to right is defined as a direction that intersects the direction in which the substrate is carried.

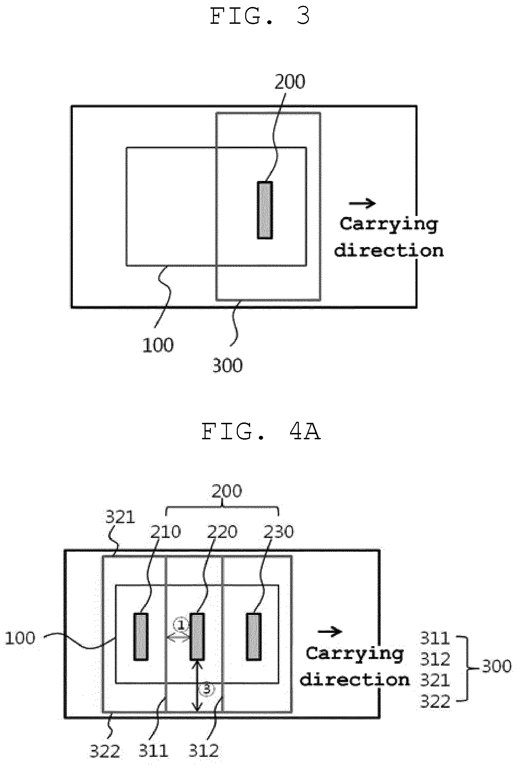

FIG. 3 is a schematic top plan view showing a high frequency heating apparatus according to an embodiment, which is not part of, but useful for the understanding of the claimed invention.

Referring to FIG. 3, the high frequency heating apparatus according to this embodiment includes a high frequency generator 200 and a reflector 300.

The high frequency generator 200 generates high frequency waves to heat a substrate 100 by vibrating ions inside the substrate 100 using the high frequency waves. The high frequency generator 200 can generate high frequency waves ranging from 0.98 GHz to 6.0 GHz, preferably, from 2.4 GHz to 5.8 GHz.

The substrate 100 is a substrate that is heated by the high frequency generator 200, and can be implemented as a plate glass that has a variety of thicknesses.

The reflector 300 reflects high frequency waves generated by the high frequency generator toward the substrate 100.

The reflector 300 can be made of a conductive metal that can reflect high frequency waves.

The reflector 300 can be disposed such that it surrounds the high frequency generator 200 from the front and rear and from left and ride sides, or be disposed at corresponding positions above and below the substrate 100. When the reflector is disposed in this fashion, it is possible to more efficiently reflect high frequency waves generated by the high frequency generator 200.

Since the reflector 300 creates multiple scattering by reflecting high frequency waves generated by the high frequency generator 200 toward the substrate 100, it is possible to uniformly heat the entire area of the substrate 100 including the corners by forming uniform electric fields over the entire area of the substrate 100. In addition, it is possible to increase the temperature growth rate of the substrate 100 and improve the energy efficiency of the high frequency heating apparatus.

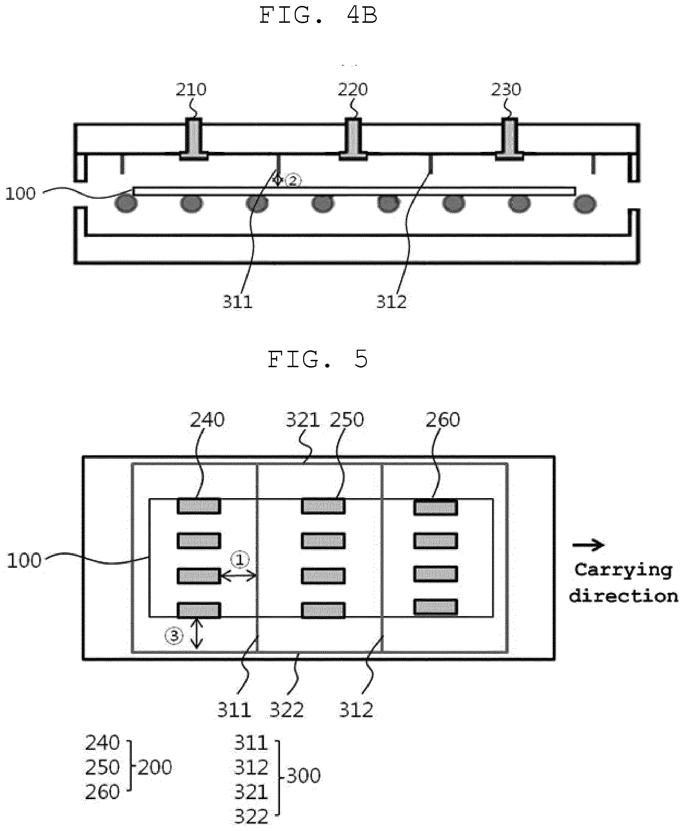

FIG. 4A and FIG. 4B are a schematic top plan view and a side elevation view showing a high frequency heating apparatus according to another embodiment of the present invention.

Referring to FIG. 4A and FIG. 4B, the high frequency heating apparatus according to this embodiment includes a plurality of high frequency generators 210, 220 and 230. The reflector 300 can partition the plurality of high frequency generators 210, 220 and 230 into high frequency generator groups each including at least one high frequency generator.

The reflector 300 can include first reflecting portions 311 and 312 which form partitions between the high frequency generator groups which are spaced apart from each other.

Here, the first reflecting portions 311 and 312 can form the partitions between the high frequency generator groups which are spaced apart from each other in the direction from the front to the rear. The first reflecting portions 311 and 312 can be configured such that they extend in the direction from left to right.

In this case, in order to efficiently prevent any interference between high frequency waves generated by the individual high frequency generators, it is preferred that the distance ① from each of the high frequency generators 210, 220 and 230 to a corresponding one of the first reflecting portions 311 and 312 be n/2*λ, where n is a natural number ranging from 1 to 12, and λ is the wavelength of high frequency waves generated by the high frequency generators. More preferably, the distance can be 2λ.

In addition, the distance ② from the substrate 100 to the first reflecting portions 311 and 312 can be 4 cm, preferably, 2 cm.

In addition, as shown in FIG. 5, when the plurality of high frequency generators 240, 250 and 260 is arranged in a plurality of rows, the first reflecting portions 311 and 312 can partition the rows of the high frequency generators 240, 250 and 260. Here, the rows of the high frequency generators 240, 250 and 260 can be formed in the direction from left to right.

In this fashion, the first reflecting portions 311 and 312 are respectively formed between the adjacent rows of the high frequency generators 240, 250 and 260. The first reflecting portions 311 and 312 prevent high frequency waves generated by the individual rows from interfering with each other, thereby preventing electric fields from being concentrated, so that the substrate 100 are not locally heated by the concentrated electric fields.

The reflector 300 according to this embodiment can include reflecting portions 321 and 322 which are disposed on the left side and/or the right side of the high frequency generators.

When the high frequency heating apparatus according to this embodiment includes the plurality of high frequency generators 240, 250 and 260 which are arranged in at least one row, the second reflecting portions 321 and 322 can be disposed on the left side and/or the right side of the row of the high frequency generators.

In addition, the second reflecting portions 321 and 322 can extend in the direction from the front to the rear.

In order to efficiently reflect high frequency waves generated by the plurality of high frequency generators 200, it is preferred that the distance ③ from the plurality of high frequency generators 200 to the second reflector 321 or 322 be 2λ or less.

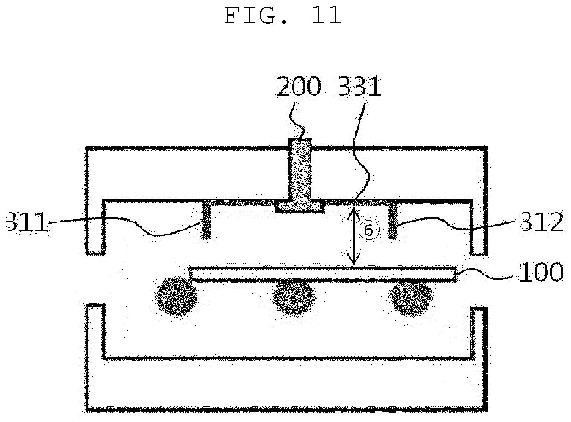

In addition, as shown in Fig. 11, in order to more efficiently reflect high frequency waves, the reflector 300 according to this embodiment can include a third reflecting portion (331) which is disposed above and/or below the substrate 100. The third reflecting portion (331) is formed such that the main plane thereof faces the main plane of the substrate 100. The embodiment of Fig. 11 is not part of, but useful for the understanding of the claimed invention.

The distance from the third reflecting portion (331) to the substrate 100 can be n/2*λ, where n is a natural number ranging from 1 to 6. Preferably, the distance can be λ.

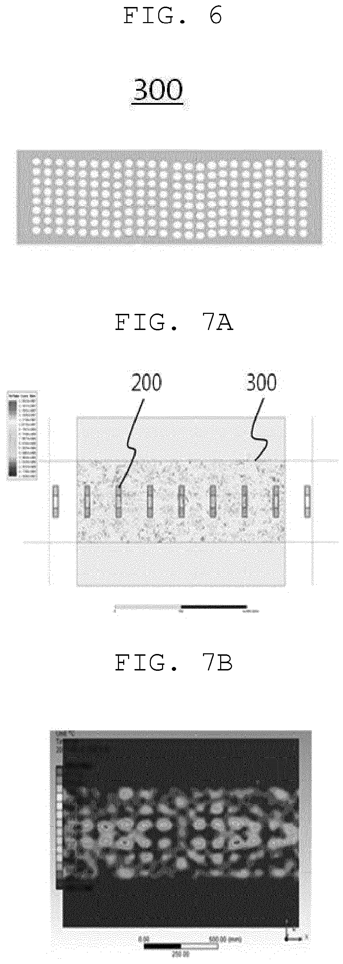

In addition, as shown in FIG. 6, the reflector 300 according to the present invention can have a number of holes in order to facilitate air convection, thereby increasing the heating efficiency. The diameter of the holes can be 3 mm or less in order to prevent high frequency waves from leaking to the outside of the reflector 300 through the holes without being reflected. Preferably, the diameter of the holes can be 2 mm.

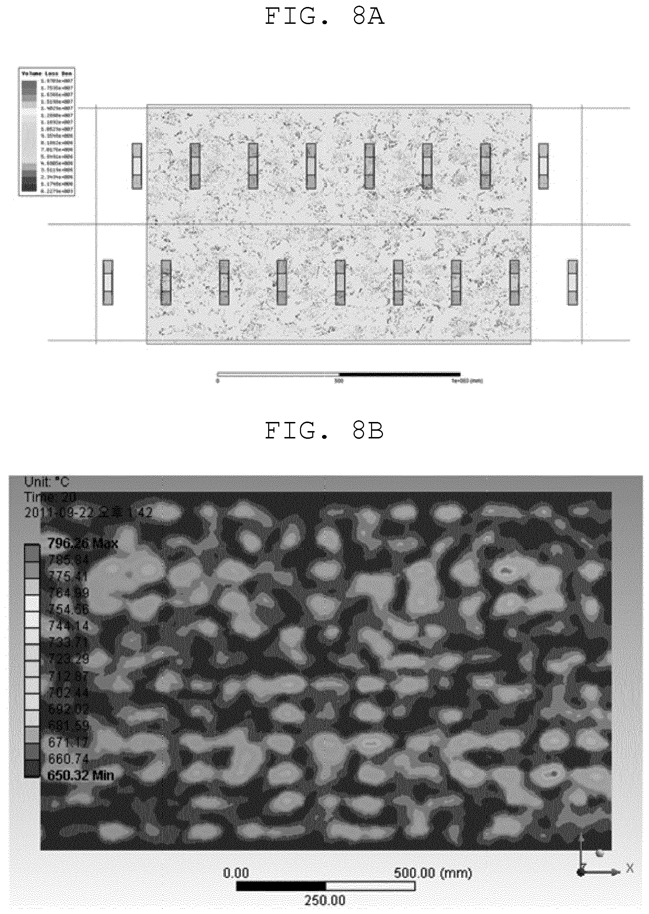

FIG. 7A and FIG. 8B are pictures of electric field distribution analysis and temperature distribution analysis that are measured after heating a piece of glass using a high frequency heating apparatus which includes a high frequency generators 200 which are disposed in one row and a reflector 300 according to an embodiment of the present invention. Here, the measurement was carried out by setting the distance from the row of frequency generators 200 to the reflector 300 to be 2λ, the distance from the substrate 100 to the reflector 300 to be 2 cm, and the diameter of the holes formed in the reflector 300 to be about 3 mm. As shown in FIG. 7A and FIG. 7B, it can be appreciated that, when the substrate 100 is heated using the high frequency heating apparatus having the reflector 300 according to the present invention, a uniform electric field is formed over the entire area of the substrate 100, which is then uniformly heated.

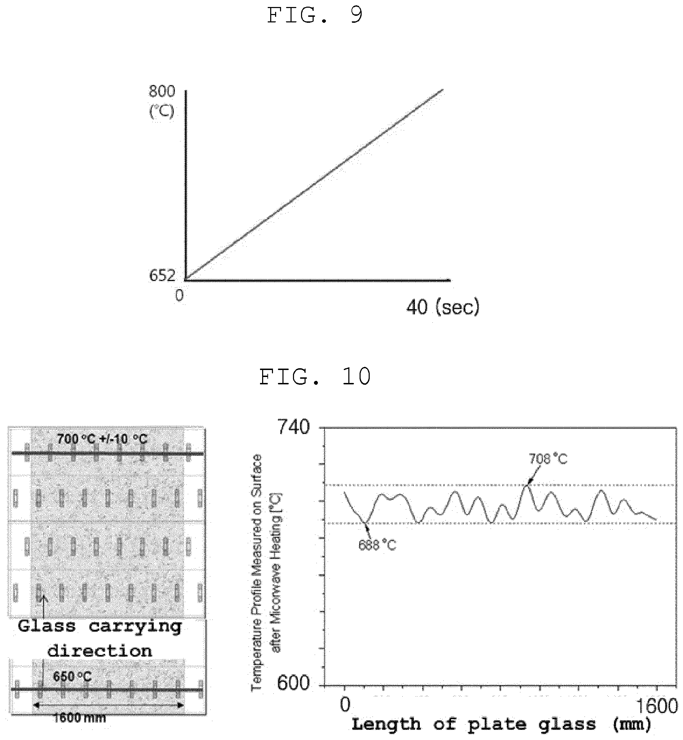

FIG. 8A and FIG. 8B are pictures of electric field distribution analysis and temperature distribution analysis that are measured after heating a piece of glass using a high frequency heating apparatus which includes a high frequency generators which are disposed in two rows and a reflector according to another embodiment of the present invention, and FIG. 9 is a graph showing the temperature growth rate of a substrate which is heated using the high frequency heating apparatus. Here, the measurement was carried out by setting the distance from the rows of high frequency generators to the reflector to be 2λ, the distance from the substrate to the reflectors to be 2 cm, and the diameter of holes formed in the reflector to be 3 mm.

As shown in FIG. 8A and FIG. 8B, it can be appreciated that, when the glass is heated using the high frequency heating apparatus having the two rows of high frequency generators, the reflector prevents high frequency waves generated by the individual rows of high frequency generators from interfering with each other so that the electric field distribution can be maintained to be equal to that of the high frequency heating apparatus having one row of high frequency generators and the substrate can be uniformly heated.

In addition, as shown in FIG. 9, according to the present invention, it is possible to prevent thermal runaway from occurring due to the nonlinear temperature growth of the substrate by linearly increasing the temperature of the substrate while realizing a high temperature growth rate.

FIG. 10 is a graph showing surface temperatures of a plate glass that are measured after the plate glass having a width of 1600 mm is heated to a temperature of 650 °C using a high frequency heating apparatus which includes a plurality of rows of high frequency generators and a reflector according to the present invention.

As shown in FIG. 10, it can be appreciated that the plate glass was very uniformly heated using the high frequency heating apparatus according to the present invention such that the distribution of the surface temperature thereof is 700 °C ± 10 °C.

In addition, the high frequency heating apparatus according to the present invention can also include a heater (not shown) which heats the substrate, in addition to the high frequency generators.

The heater (not shown) heats the substrate from outside to inside by generating heat through electrical resistance, and the high frequency generators vibrate ions inside the substrate using high frequency waves and heat the inside and outside of the substrate using resultant frictional heat. In this fashion, the substrate can be more efficiently heated.

## Claims

1. A high frequency heating apparatus comprising:
a high frequency generator (200) which generates high frequency to heat a substrate (100); and
a reflector (300) which reflects the high frequency generated by the high frequency generator (200) toward the substrate (100), wherein the high frequency generator (200) comprises a plurality of high frequency generators (210, 220, 230), and the reflector (300) partitions the plurality of high frequency generators (210, 220, 230) into groups each including at least one high frequency generator of the plurality of high frequency generators (210, 220, 230), wherein the reflector (300) comprises a first reflecting portion (311) which forms a partition between high frequency generators of the plurality of high frequency generators (210, 220, 230) which are spaced apart from each other, **characterized in that** the first reflecting portion (311) has a plurality of holes, the holes having a diameter of 3 mm or less, wherein a distance from the high frequency generators of the plurality of high frequency generators (210, 220, 230) which are spaced apart from each other to the first reflecting portion is n/2*λ, where n is a natural number ranging from 1 to 12, and λ is a wavelength of the high frequency that is generated by the plurality of high frequency generators.

2. The high frequency heating apparatus of claim 1, wherein the first reflecting portion (311) forms the partition between high frequency generators of the plurality of high frequency generators (210, 220, 230) which are spaced apart from each other in a direction from a front to a rear, the direction from the front to the rear being a direction in which the substrate (100) is carried.

3. The high frequency heating apparatus of claim 1, wherein
the plurality of high frequency generators (240, 250, 260) are arranged in a plurality of rows, and
the first reflecting portion (311) partitions the rows of high frequency generators (240, 250, 260).

4. The high frequency heating apparatus of one of the previous claims, wherein a distance from the substrate (100) to the first reflecting portion (311) is 4 cm or less.

5. The high frequency heating apparatus of one of the previous claims, wherein the reflector comprises a second reflecting portion (321) which is disposed on a left side and/or a right side of the high frequency generator (200), a direction from the left side to the right side intersecting a direction in which the substrate (100) is carried.

6. The high frequency heating apparatus of claim 5, wherein
the high frequency generator (200) comprises a plurality of high frequency generators (240, 250, 260) which are arranged in at least one row, and
the second reflecting portion (321) is disposed on the left side and/or the right side of the at least one row of the plurality of high frequency generators (240, 250, 260).

7. The high frequency heating apparatus of claim 6, wherein a distance from the row of high frequency generators (240, 250, 260) to the second reflecting portion (321) is 2λ, where λ is a wavelength of the high frequency that is generated by the plurality of high frequency generators (240, 250, 260).

8. The high frequency heating apparatus of one of the previous claims, wherein the reflector (300) comprises a third reflecting portion (331) which is disposed above and/or below the substrate (100), a main plane of the third reflecting portion (331) facing a main plane of the substrate (100).

9. The high frequency heating apparatus of claim 8, wherein a distance from the third reflecting portion (331) to the substrate (100) is n/2*λ, where n is a natural number ranging from 1 to 6, and λ is a wavelength of the high frequency that is generated by the high frequency generator (200).

10. The high frequency heating apparatus of one of the previous claims, wherein the reflector (300) surrounds the high frequency generator (200) from a front, a rear, a left side and a right side, a direction from the front to the rear being a direction in which the substrate (100) is carried, and a direction from the left side to the right side being a direction that intersects the direction in which the substrate (100) is carried.

11. The high frequency heating apparatus of one of the previous claims, wherein the reflector (300) is disposed at corresponding positions above and below the substrate (100).

## Patentansprüche

1. Ein Hochfrequenzheizgerät, aufweisend:
einen Hochfrequenzgenerator (200), der Hochfrequenz erzeugt, um ein Substrat (100) zu heizen; und
einen Reflektor (300), der die vom Hochfrequenzgenerator (200) erzeugte Hochfrequenz zum Substrat (100) reflektiert, wobei der Hochfrequenzgenerator (200) eine Vielzahl von Hochfrequenzgeneratoren (210, 220, 230) aufweist und der Reflektor (300) die Vielzahl der Hochfrequenzgeneratoren (210, 220, 230) in Gruppen, die jeweils zumindest einen Hochfrequenzgenerator aus der Vielzahl der Hochfrequenzgeneratoren (210, 220, 230) aufweisen, unterteilt, wobei der Reflektor (300) einen ersten reflektierenden Abschnitt (311), der eine Unterteilung zwischen Hochfrequenzgeneratoren der Vielzahl der Hochfrequenzgeneratoren (210, 220, 230), die voneinander beabstandet sind, ausbildet, aufweist, **dadurch gekennzeichnet, dass** der erste reflektierende Abschnitt (311) eine Vielzahl von Löchern aufweist, wobei die Löcher einen Durchmesser von 3 mm oder weniger haben, wobei ein Abstand von den Hochfrequenzgeneratoren der Vielzahl der Hochfrequenzgeneratoren (210, 220, 230), die voneinander beabstandet sind, zum ersten reflektierenden Abschnitt n/2*λ beträgt, wobei n eine natürliche Zahl im Bereich von 1 bis 12 ist und λ eine Wellenlänge der Hochfrequenz, die von der Vielzahl der Hochfrequenzgeneratoren erzeugt wird, ist.

2. Das Hochfrequenzheizgerät des Anspruch 1, wobei der erste reflektierende Abschnitt (311) die Unterteilung zwischen Hochfrequenzgeneratoren der Vielzahl der Hochfrequenzgeneratoren (210, 220, 230), die voneinander beabstandet sind, in einer Richtung von einer Front zu einer Rückseite ausbildet, wobei die Richtung von der Front zu der Rückseite eine Richtung, in die das Substrat (100) befördert wird, ist.

3. Das Hochfrequenzheizgerät nach Anspruch 1, wobei
die Vielzahl der Hochfrequenzgeneratoren (240, 250, 260) in einer Vielzahl von Reihen angeordnet ist, und
der erste reflektierende Abschnitt (311) die Reihen der Hochfrequenzgeneratoren (240, 250, 260) unterteilt.

4. Das Hochfrequenzheizgerät eines der vorhergehenden Ansprüche, wobei ein Abstand vom Substrat (100) zum ersten reflektierenden Abschnitt (311) 4 cm oder weniger beträgt.

5. Das Hochfrequenzheizgerät eines der vorhergehenden Ansprüche, wobei der Reflektor einen zweiten reflektierenden Abschnitt (321), der auf einer linken Seite und/oder einer rechten Seite des Hochfrequenzgenerators (200) angeordnet ist, aufweist, wobei eine Richtung von der linken Seite zur rechten Seite eine Richtung, in die das Substrat (100) befördert wird, schneidet.

6. Das Hochfrequenzheizgerät des Anspruchs 5, wobei
der Hochfrequenzgenerator (200) eine Vielzahl von Hochfrequenzgeneratoren (240, 250, 260), die in zumindest einer Reihe angeordnet sind, aufweist, und
der zweite reflektierende Abschnitt (321) auf der linken Seite und/oder der rechten Seite der zumindest einen Reihe der Vielzahl der Hochfrequenzgeneratoren (240, 250, 260) angeordnet ist.

7. Das Hochfrequenzheizgerät des Anspruchs 6, wobei ein Abstand von der Reihe der Hochfrequenzgeneratoren (240, 250, 260) zum zweiten reflektierenden Abschnitt (321) 2λ beträgt, wobei λ eine Wellenlänge der Hochfrequenz, die von der Vielzahl der Hochfrequenzgeneratoren (240, 250, 260) erzeugt wird, ist.

8. Das Hochfrequenzheizgerät eines der vorhergehenden Ansprüche, wobei der Reflektor (300) einen dritten reflektierenden Abschnitt (331), der über und/oder unter dem Substrat (100) angeordnet ist, aufweist, wobei eine Hauptebene des dritten reflektierenden Abschnitts (331) einer Hauptebene des Substrats (100) zugewandt ist.

9. Das Hochfrequenzheizgerät des Anspruchs 8, wobei ein Abstand vom dritten reflektierenden Abschnitt (331) zum Substrat (100) n/2*λ beträgt, wobei n eine natürliche Zahl im Bereich von 1 bis 6 ist und λ eine Wellenlänge der Hochfrequenz, die vom Hochfrequenzgenerator (200) erzeugt wird, ist.

10. Das Hochfrequenzheizgerät eines der vorhergehenden Ansprüche, wobei der Reflektor (300) den Hochfrequenzgenerator (200) von einer Front, von einer Rückseite, von einer linken Seite und von einer rechten Seite umgibt, wobei eine Richtung von der Front zur Rückseite eine Richtung, in der das Substrat (100) befördert wird, ist und eine Richtung von der linken Seite zur rechten Seite eine Richtung, die die Richtung, in der das Substrat (100) befördert wird, schneidet, ist.

11. Das Hochfrequenzheizgerät eines der vorhergehenden Ansprüche, wobei der Reflektor (300) in entsprechenden Positionen über und unter dem Substrat (100) angeordnet ist.

## Revendications

1. Un appareil de chauffage à haute fréquence, comprenant :
un générateur de haute fréquence (200) qui génère une haute fréquence pour chauffer un substrat (100) ; et
un réflecteur (300) qui réfléchit la haute fréquence générée par le générateur de haute fréquence (200) vers le substrat (100), le générateur de haute fréquence (200) comprenant une pluralité de générateurs de haute fréquence (210, 220, 230), et le réflecteur (300) séparant la pluralité de générateurs de haute fréquence (210, 220, 230) en groupes dont chacun comprend au moins un générateur de haute fréquence de la pluralité de générateurs de haute fréquence (210, 220, 230), le réflecteur (300) comprenant une première partie réfléchissante (311) qui forme une séparation entre des générateurs de haute fréquence de la pluralité de générateurs de haute fréquence (210, 220, 230) qui sont espacés les uns des autres, **caractérisé en ce que** la première partie réfléchissante (311) a une pluralité de trous, les trous ayant un diamètre de 3 mm ou moins, une distance depuis les générateurs de haute fréquence de la pluralité de générateurs de haute fréquence (210, 220, 230) qui sont espacés les uns des autres jusqu'à la première partie réfléchissante étant de n/2*λ, n étant un entier naturel compris entre 1 et 12, et λ étant une longueur d'onde de la haute fréquence qui est générée par la pluralité de générateurs de haute fréquence.

2. L'appareil de chauffage à haute fréquence selon la revendication 1, dans lequel la première partie réfléchissante (311) forme la séparation entre des générateurs de haute fréquence de la pluralité de générateurs de haute fréquence (210, 220, 230) qui sont espacés les uns des autres dans une direction allant d'un côté avant vers d'un côté arriére, la direction d'un côté avant vers d'un côté arriére étant une direction dans laquelle est transporté le substrat (100).

3. L'appareil de chauffage à haute fréquence selon la revendication 1, dans lequel la pluralité de générateurs de haute fréquence (240, 250, 260) est disposée en une pluralité de rangées, et
la première partie réfléchissante (311) sépare les rangées de générateurs de haute fréquence (240, 250, 260).

4. L'appareil de chauffage à haute fréquence selon l'une des revendications précédentes, dans lequel une distance depuis le substrat (100) jusqu'à la première partie réfléchissante (311) est de 4 cm ou moins.

5. L'appareil de chauffage à haute fréquence selon l'une des revendications précédentes, dans lequel le réflecteur comprend une deuxième partie réfléchissante (321) qui est disposée sur un côté gauche et/ou un côté droit du générateur de haute fréquence (200), une direction allant du côté gauche au côté droit croisant une direction dans laquelle est transporté le substrat (100).

6. L'appareil de chauffage à haute fréquence selon la revendication 5, dans lequel
le générateur de haute fréquence (200) comprend une pluralité de générateurs de haute fréquence (240, 250, 260) qui sont disposés en au moins une rangée, et
la deuxième partie réfléchissante (321) est disposée sur le côté gauche et/ou le côté droit de l'au moins une rangée de la pluralité de générateurs de haute fréquence (240, 250, 260).

7. L'appareil de chauffage à haute fréquence selon la revendication 6, dans lequel une distance depuis la rangée de générateurs de haute fréquence (240, 250, 260) jusqu'à la deuxième partie réfléchissante (321) est de 2λ, λ étant une longueur d'onde de la haute fréquence qui est générée par la pluralité de générateurs de haute fréquence (240, 250, 260).

8. L'appareil de chauffage à haute fréquence selon l'une des revendications précédentes, dans lequel le réflecteur (300) comprend une troisième partie réfléchissante (331) qui est disposée au-dessus et/ou au-dessous du substrat (100), un plan principal de la troisième partie réfléchissante (331) faisant face à un plan principal du substrat (100).

9. L'appareil de chauffage à haute fréquence selon la revendication 8, dans lequel une distance depuis la troisième partie réfléchissante (331) jusqu'au substrat (100) est de n/2*λ, n étant un entier naturel compris entre 1 à 6, et λ étant une longueur d'onde de la haute fréquence qui est générée par le générateur de haute fréquence (200).

10. L'appareil de chauffage à haute fréquence selon l'une des revendications précédentes, dans lequel le réflecteur (300) entoure le générateur de haute fréquence (200) d'un côté avant, d'un côté arriére, d'un côté gauche et d'un côté droit, une direction allant du côté avant vers du côté arriére étant une direction dans laquelle est transporté le substrat (100), et une direction allant du côté gauche au côté droit étant une direction qui croise la direction dans laquelle est transporté le substrat (100).

11. L'appareil de chauffage à haute fréquence selon l'une des revendications précédentes, dans lequel le réflecteur (300) est disposé à des positions correspondantes situées au-dessus et au-dessous du substrat (100).
